# EUROPÄISCHE PATENTSCHRIFT

(11) **EP 1 881 308 B1**
(45) Veröffentlichungstag und Bekanntmachung des Hinweises auf die Patenterteilung: **18.05.2011**
(21) Anmeldenummer: 07010542.4
(22) Anmeldetag: 26.05.2007
(51) Int. Cl.: G01K 1/08, G01K 13/02

(54) **Temperaturfühler für ein widerstandsthermometer, insbesondere zur verwendung im abgasstrang von verbrennungsmotoren**
Temperature sensor for a resistance thermometer, in particular for use in the exhaust section of combustion engines
Sonde de température pour un thermomètre à résistance, en particulier destiné à l'utilisation dans un système d'échappement de moteurs à combustion

(30) Priorität: 21.07.2006 DE 102006034248
(43) Veröffentlichungstag der Anmeldung: 23.01.2008
(73) Patentinhaber: BorgWarner BERU Systems GmbH, 71636 Ludwigsburg (DE)
(72) Erfinder: Houben, hans, 52146 Würselen (DE); Zaiser, Rüdiger, 71691 Freiberg (DE); Mayr, Friedrich, 73760 Ostfildern (DE); Buck, Helmut, 71729 Erdmannhausen (DE); Mohl, Markus, 71672 Marbach (DE); Hartmann, Robert, 71732 Tamm (DE); Lehmann, Heiner, 71642 Ludwigsburg (DE); Schneider, Werner, D-88069 Tettnang (DE); Marto, Arno, 71263 Weil der Stadt (DE); Kasimirski, Hans-Peter, 71640 Ludwigsburg (DE)
(74) Vertreter: Mommer, Niels

(56) Entgegenhaltungen:
- EP-A- 0 810 425
- DE-A1- 4 302 146
- JP-A- 9 126 910
- JP-A- 2000 035 364

## Beschreibung

Die Erfindung geht von einem Temperaturfühler mit den im Oberbegriff des Anspruchs 1 angegebenen Merkmalen aus. Ein solcher Temperaturfühler ist aus der DE 43 02 146 A1 bekannt.

Ein ähnlicher Temperaturfühler ist aus der DE 44 24 384 C2 bekannt. Er hat einen Messwiderstand, welcher aus elektrischem Widerstandsmaterial, insbesondere Platin, gebildet ist, welches sich auf einem flächenhaften Substrat befindet. Zum Aufnehmen des Messwiderstandes ist ein metallisches Schutzrohr vorgesehen, welches eine gesonderte Messspitze aufweist. Die Messspitze ist ein am vorderen Ende geschlossenes Rohr, welches, solange es noch leer ist, in seinem vorderen Abschnitt zur Bildung einer flächenhaften Verjüngung zusammengequetscht wird. In die Verjüngung wird der flächenhafte Messwiderstand geschoben, dessen vorhandene Anschlussleitungen durch Anschlussdrähte verlängert sind, die aus dem hinteren offenen Ende der Messspitze herausführen. In die Messspitze wird nach dem Einschieben des Messwiderstandes eine Keramikmasse auf der Basis von Polysilikaten eingebracht, welche den noch verfügbaren Raum in der Messspitze füllt und dadurch den Messwiderstand einbettet. Die so vorbereitete Messspitze wird dann mit einem längeren metallischen Schutzrohr verschweißt, aus welchem die verjüngte Messspitze vorsteht. In dem längeren Schutzrohr verlaufen die Anschlussdrähte in einem Luftraum und sind mit den Leitern eines Anschlusskabels verbunden, dessen Mantel durch Krimpen in einem hinteren Endabschnitt des Schutzrohres festgelegt ist. Dieser bekannte Temperaturfühler ist verhältnismäßig aufwändig in der Herstellung und für einen Einsatzzweck im Abgasstrang von Verbrennungsmotoren nicht haltbar genug.

Die Einsatzbedingungen für den Temperaturfühler im Abgasstrang von Verbrennungsmotoren sind schwierig. Sie sind gekennzeichnet durch hohe Temperaturen von über 600° C bis in die Nähe von 1000°C, durch schnelle Temperaturänderungen, z. B. durch Temperaturanstiege um 800°C in nur 5 Sekunden, durch Vibrationen und das Umspültwerden von aggressiven Medien. Dem ist der bekannte Temperaturfühler nicht gewachsen. Die schnellen Temperaturänderungen führen in Verbindung mit den unterschiedlichen Wärmeausdehnungskoeffizienten, welche die metallischen Anschlussdrähte einerseits und die keramische Einbettmasse andererseits haben, zu Beanspruchungen der Anschlussdrähte, die dazu führen können, dass die Anschlussdrähte abreißen. Den größten Teil des Schutzrohres deshalb frei von keramischer Einbettmasse zu lassen, wie es die DE 44 24 384 C2 offenbart, ist keine Lösung des Problems, weil die freiliegenden Anschlussdrähte durch die dauernden Vibrationen gefährdet sind, die auch den Messwiderstand gefährden.

Temperaturfühler, wie sie in der DE 102 54 637 B4 und in der DE 199 22 928 A1 offenbart sind, wo ein in koaguliertes keramisches Pulver, z. B. Aluminiumoxid, eingebetteter Thermistor an ein mineralisoliertes Kabel angeschlossen ist, welches unmittelbar an die Aluminiumoxid-Einbettmasse anschließt, weisen ähnliche Nachteile auf.

Aus der DE 100 34 265 ist ein Temperaturfühler bekannt, dessen Messwiderstand sich in einem geschlossenen Schutzrohr befindet, in welchem er nicht in ein isolierendes keramisches Material eingebettet ist, sondern in einer Luftkammer liegt. Als Anschlusskabel dient ein mineralisch isoliertes zweiadriges Kabel mit Metallmantel, welches mit dem hinteren Abschnitt des Schutzrohres für den Messwiderstand verschweißt ist. In diesem Fall ist der im Schutzrohr frei in einer Luftkammer liegende Messwiderstand besonders durch Vibrationen gefährdet und spricht träge an, weil er durch die ihn umgebende Luft gut wärmeisoliert ist. Um diesem Nachteil zu begegnen, ist es aus der DE 101 58 527 A1 bekannt, in der Spitze des Schutzrohres, im Bereich des Messwiderstandes, Öffnungen vorzusehen, durch welche das Abgas eindringen und den Messwiderstand umströmen kann. Dadurch spricht der Temperaturfühler zwar schneller auf Temperaturänderungen an, der Messwiderstand ist jedoch dem chemischen Angriff der Abgase ausgesetzt, neigt zur Verschmutzung durch Ablagerung unverbrannter Kraftstoffreste, insbesondere Russ und Kondensat, was zusätzlich die Gefahr mit sich bringt, dass zwischen den Zuleitungen des Messwiderstandes ein elektrischer Nebenschluss gebildet ist. Obendrein sind Messwiderstände, die dem Abgas in einem offenen Schutzrohr ausgesetzt werden müssen, wesentlich teuerer als Messwiderstände, die in geschlossenen Schutzrohren eingesetzt werden können.

Die einander teilweise widersprechenden Anforderungen an Temperaturfühler, die im Abgasstrang von Verbrennungsmotoren eingesetzt werden sollen, erschweren das Auffinden eines Temperaturfühlers, welcher für einen Einsatz im Abgasstrang von Verbrennungsmotoren in Fahrzeugen nicht nur preiswert, sondern auch zuverlässig, mechanisch stabil, langlebig, unempfindlich gegenüber den chemischen Angriffen des heißen Abgases sein und auf Temperaturänderungen schnell ansprechen soll.

Diese Aufgabe wird gelöst durch einen Temperaturfühler mit den im Anspruch 1 angegebenen Merkmalen. Vorteilhafte Weiterbildungen der Erfindung sind Gegenstand der Unteransprüche.

Der erfindungsgemäße Temperaturfühler hat einen elektrischen Messwiderstand, welcher als Widerstandsmaterial entweder einen keramischen Werkstoff oder ein metallisches Widerstandsmaterial in Verbindung mit einem keramischen oder mineralischen Träger aufweist. Ein Schutzrohr, welches eine geschlossene Spitze und ein hinteres Ende mit einem Zugang zum Innenraum des Schutzrohres hat, enthält den Messwiderstand nahe bei der geschlossenen Spitze des Schutzrohres. Aus dem hinteren Ende des Schutzrohres führt mindestens eine Zuleitung des Messwiderstandes heraus. Eine zweite Zuleitung des Messwiderstandes führt entweder ebenfalls aus dem hinteren Ende des Schutzrohres heraus oder ist mit der Spitze des Schutzrohres verbunden; im zweiten Fall schützt das Schutzrohr den Messwiderstand nicht nur, sondern dient auch als eine seiner Zuleitungen. In dem Schutzrohr sind der Messwiderstand und seine wenigstens eine Zuleitung in einen Füllstoff auf der Grundlage eines keramischen oder mineralischen Materials eingebettet. Am hinteren Ende des Schutzrohres ist vorzugsweise ein Verschluss vorgesehen, welcher den Füllstoff im Schutzrohr zurückhält und durch welchen hindurch die wenigstens eine Zuleitung aus dem hinteren Ende des Schutzrohres herausgeführt ist. Die Packungsdichte des Füllstoffs im Schutzrohr ist nicht überall gleich, sondern hat in Längsrichtung des Schutzrohrs einen Gradienten. Dadurch, dass die Packungsdichte stellenweise angehoben wird, kann an diesen Stellen und in ihrer Nachbarschaft die von Vibrationen ausgehende Gefährdung herabgesetzt werden. Dadurch, dass an anderen Stellen eine demgegenüber geringere Packungsdichte vorgesehen ist, kann in diesem Bereich die Gefährdung durch unterschiedliche Wärmedehnungen der keramischen oder mineralischen Bestandteile des Temperaturfühlers einerseits und seiner metallischen Bestandteile andererseits herabgesetzt werden.

Mit der Kombination dieser Merkmale ist eine Optimierung des Temperaturfühlers gelungen, welche eine ganze Reihe von Vorteilen aufweist, deren Vereinigung bisher an den einander teilweise widersprechenden Anforderungen an den Temperaturfühler scheiterte.
- Der Messwiderstand befindet sich geschützt in einem geschlossenen Schutzrohr, so dass er den Angriffen der heißen Abgase nicht ausgesetzt ist. Die heißen Abgase wirken vielmehr ausschließlich auf das Schutzrohr ein, für welches geeignete hochwärmebeständige und chemisch widerstandsfähige Metalle und Metalllegierungen bekannt sind.
- Das Schutzrohr kann einstückig hergestellt und verwendet werden, was für eine preiswerte Herstellung günstig ist.
- Der Messwiderstand ist in einen keramischen Füllstoff eingebettet, welcher den Messwiderstand sowohl vor den für den Einsatzzweck typischen Vibrationsbeanspruchungen schützt als auch für einen guten Wärmeübergang vom Schutzrohr auf den elektrischen Messwiderstand sorgt, so dass er auf Temperaturänderungen rasch anspricht.
- Die Zuleitungen des Messwiderstandes verlaufen ebenfalls in einem Füllstoff auf der Grundlage eines keramischen oder mineralischen Materials und sind dadurch nicht nur elektrisch isoliert, sondern auch mechanisch geschützt, insbesondere gegen den Einfluss der vom Motor und vom Fahrbetrieb ausgehenden Vibrationen.
- Das Einbringen des Messwiderstandes und seiner wenigstens einen Zuleitung in einen Füllstoff auf der Grundlage eines keramischen oder mineralischen Materials wirkt sich bei dem erfindungsgemäßen Temperaturfühler anders als im Stand der Technik bei der Beanspruchung durch steile und hohe Temperaturrampen bei weitem nicht so nachteilig aus wie im Stand der Technik, so dass eine deutlich längere Lebensdauer erzielt wird. Dieser Vorteil wird erreicht durch eine verblüffend einfache Maßnahme, nämlich dadurch, dass der Füllstoff im Schutzrohr nicht gleichmäßig dicht gepackt ist, sondern in Längsrichtung des Schutzrohrs einen Gradienten der Packungsdichte hat.
- Eine solche gezielte Einstellung eines Gradienten der Packungsdichte ist mit einfachen Mitteln zu erreichen und verteuert die Herstellung des Temperaturfühlers nicht oder nur unwesentlich, verglichen mit einem Temperaturfühler, bei welchem nicht gezielt eine ungleichförmige Packungsdichte eingestellt wird.
- Eine bereichsweise geringere Packungsdichte erleichtert eine Relativbewegung zwischen dem Messwiderstand und seinen Zuleitungen auf der einen Seite und dem keramischen oder mineralischen Füllstoff auf der anderen Seite, so dass die durch die unvermeidlichen Wärmedehnungen verursachte Wechselwirkung zwischen dem Messwiderstand und seinen Zuleitungen auf der einen Seite und dem keramischen oder mineralischen Füllstoff auf der anderen Seite den Messwiderstand und seine Zuleitungen entscheidend weniger belastet als im Stand der Technik. Dafür ist insbesondere ein Minimum der Packungsdichte des Füllstoffes im Bereich der Zuleitungen von Bedeutung.
- Der Messwiderstand ist durch Vibrationen besonders gefährdet. Dem begegnet die Erfindung durch eine lokale Verdichtung im Bereich des Messwiderstandes oder in seiner Nachbarschaft, insbesondere im Bereich zwischen dem Messwiderstand und dem hinteren Ende des Schutzrohrs, unmittelbar an den Messwiderstand angrenzend. Diese lokale Verdichtung ist eine vorbeugende Maßnahme dagegen, dass Vibrationen einen Hohlraum im Füllstoff erzeugen, in welchem der Messwiderstand schwingen kann. Es hat sich gezeigt, dass eine geringere Packungsdichte des Füllstoffs neben einer lokalen Verdichtung im Bereich des Messwiderstandes die Ansprechgeschwindigkeit des Temperaturfühlers nicht oder nur unwesentlich herabsetzt. Eine lokale Verdichtung des Füllstoffes reicht aus, den Messwiderstand vor dem schädlichen Einfluss der unvermeidlichen Vibrationen zu schützen. Gleichzeitig beugen die Bereiche mit demgegenüber niedrigerer Packungsdichte einem Ausfall durch zu hohe Wärmespannungen vor.
- Außerdem hat eine lokal geringere Packungsdichte des Füllstoffs im Bereich des Messwiderstandes neben einer lokal höheren Packungsdichte den Vorteil, dass die Gefahr einer Beschädigung des Messwiderstandes, der selbst ein keramisches Bauteil ist oder auf einem keramischen oder mineralischen Substrat, insbesondere auf einer Platte aufgebaut ist, beim Packen des Füllstoffs verringert wird.

Der bevorzugt vorgesehene Verschluss des Schutzrohres ist nicht nur geeignet, den Füllstoff im Schutzrohr zurückzuhalten, sondern ist auch geeignet, die gewollt ungleichmäßige Packungsdichte des Füllstoffs im Schutzrohr trotz der Vibrationen, die dazu neigen, Unterschiede in der Packungsdichte auszugleichen, zu bewahren, indem der Verschluss den Spielraum für eine Umverteilung des Füllstoffs im Schutzrohr einengt. Zu diesem Zweck ist es besonders günstig den Füllstoff mit Hilfe des Verschlusses mechanisch vorzuspannen. Tut man das, ergibt sich vor dem Verschluss eine lokal erhöhte Packungsdichte, d. h. ein weiteres Maximum der Packungsdichte.
Vorzugsweise ist ein weiteres Maximum der Packungsdichte am hinteren Ende des Schutzrohres vorgesehen. Das ist geeignet, die wenigstens eine aus dem hinteren Ende des Schutzrohres herausführende Zuleitung des Messwiderstandes an dieser Stelle im Schutzrohr gezielt festzulegen. Es hat sich gezeigt, dass das nicht nur für den Zusammenhalt des Temperaturfühlers, sondern auch für seine Widerstandsfähigkeit gegenüber Vibrationen günstig ist. Durch Temperaturrampen verursachte Längenänderungen der Zuleitung können sich trotz des Fixpunktes im Bereich des am hinteren Ende des Schutzrohrs liegenden zusätzlichen Maximums der Packungsdichte in den Bereichen des Füllstoffes mit niedrigerer Packungsdichte ohne eine Gefahr für das Abreißen einer Zuleitung auswirken.

Eine lokale Verdichtung des Füllstoffs ist mit Vorteil dort vorgesehen, wo sich der Messwiderstand befindet, so dass dieser lokal direkt fest in den Füllstoff eingepackt ist. Alternativ ist es möglich, den Füllstoff unmittelbar neben dem Messwiderstand lokal zu verdichten. Das hat den Vorteil, dass das Risiko einer Beschädigung des Messwiderstandes durch den Vorgang des Verdichtens des Füllstoffes geringer ist. Die beiden Maßnahmen lassen sich mit Vorteil miteinander kombinieren, wobei der Grad der Verdichtung geringer sein kann.

Die lokale Verdichtung kann man erzielen, indem man den Querschnitt des Schutzrohrs durch Einwirkung von außen verengt, z. B. mit einem Crimpwerkzeug. In der Umgebung des Messwiderstandes soll die Verengung des Schutzrohrs so begrenzt sein, dass der Innendurchmesser des Schutzrohrs größer bleibt als der vom Messwiderstand beanspruchte Platz.

Infolge der nachträglichen Verengung des Schutzrohrs gelangt der Füllstoff lokal unter eine mechanische Vorspannung.

Vorzugsweise weist der Verschluss einen Stopfen auf, durch welchen die wenigstens eine Anschlussleitung des Messwiderstandes elektrisch isoliert hindurchgeführt ist. Dieser Stopfen kann in das Schutzrohr gepresst und so festgelegt werden, dass vor dem Stopfen eine Vorspannung des Füllstoffes erhalten bleibt. Eine Möglichkeit, um das zu erreichen, besteht darin, das Schutzrohr am hinteren Ende mit einem Außengewinde zu versehen und den Stopfen durch eine auf das Schutzrohr geschraubte Überwurfmutter in das Schutzrohr zu drücken. Damit sich die die Überwurfmutter nicht löst, kann sie in ihrer vorgespannten Lage durch Verlöten, Verschweißen oder Verstemmen gesichert werden: Sehr viel einfacher und preiswerter und deshalb besonders bevorzugt ist eine Weiterbildung der Erfindung, in welcher der Stopfen in das Schutzrohr gepresst und durch Bördeln des Randes des Schutzrohres gesichert wird. Weitere gute Möglichkeiten, den Stopfen festzulegen und die Vorspannung des Füllstoffes aufrechtzuerhalten, besteht darin, den Stopfen zu verstiften oder das Schutzrohr im Bereich des Stopfens zu verstemmen oder zu quetschen.

Wird der Füllstoff durch den Verschluss mechanisch vorgespannt, liegt am Verschluss ein Maximum der Packungsdichte. Ein Maximum der Packungsdichte kann aber auch an anderer Stelle liegen, z. B. in der Mitte zwischen dem Verschluss und dem Messwiderstand. Auch an einer solchen Stelle kann ein Maximum der Packungsdichte dadurch erzeugt werden, dass der Querschnitt des Schutzrohres an der betreffenden Stelle durch Einwirken von außen verringert wird, indem das Schutzrohr an dieser Stelle plastisch verformt wird. Das kann z. B. durch Hämmern oder Quetschen geschehen. Die Brauchbarkeit des Temperaturfühlers wird dadurch nicht beeinträchtigt. Von einem solchen mittig gelegenen Maximum der Packungsdichte aus kann eine thermisch verursachte Längenänderung der Zuleitungen schadlos in beide Richtungen erfolgen.

In erster Linie befindet sich am Messwiderstand oder in seiner Nachbarschaft ein Maximum der Packungsdichte.

Vorzugsweise gibt es entlang des Schutzrohres zwei oder höchstens drei Maxima der Packungsdichte, nämlich eines oder zwei im Bereich des Messwiderstandes oder nahe beim Messwiderstand und ein weiteres am Verschluss am hinteren Ende des Schutzrohres. Das ist für die angestrebte Langlebigkeit des Temperaturfühlers besonders günstig.

Die niedrigere Packungsdichte ist z. B. jene, die man erreicht, wenn man das Schutzrohr unter Vibrationen mit dem Füllstoff in Pulverform füllt. Lokale Verdichtungen erreicht man demgegenüber durch eine nachträgliche lokale Durchmesserverringerung des Schutzrohres und durch Drücken auf den Verschluss.

Als Füllstoff besonders geeignet ist Magnesiumoxid, welches hoch temperaturbeständig, preiswert und leicht zu verarbeiten ist. Als Füllstoff geeignet sind auch Aluminiumoxid, Aluminiumnitrid und Polysilikate in Pulverform und Mischungen davon. Damit sind die geeigneten Füllstoffe jedoch nicht abschließend aufgezählt, vielmehr handelt es sich um besonders geeignete Beispiele. Außer keramischen und mineralischen Füllstoffen in Pulverform eignen sich auch keramische Vergussmassen, keramische Kleber und Wärmeleitelemente als Füllstoffe. Ein Beispiel für eine geeignete keramische Vergussmasse ist das von der Panasol-Elosol GmbH in D-61440 Oberursel unter dem Handelsnamen vertriebene Cerastil V 336, welches durch chemische Reaktion abbindet und bis 1650° beständig ist.
Ein Beispiel für einen geeigneten keramischen Kleber wird von der Cotronics Corp. in Brooklyn, NY 11235, USA, unter dem Handelsnamen Cotronics 906 vertrieben.

Als Messwiderstände eignen sich für den Temperaturbereich von 600°C bis ca. 1000°C keramische Kaltleiter, d. h. keramische Messwiderstände mit negativem Temperaturkoeffizienten. Besonders bevorzugt sind für Zwecke der Erfindung Flachmesswiderstände.

Flachmesswiderstände bestehen aus einem metallischen Widerstandsmaterial, welches auf einen flachen keramischen Träger, auch als Substrat bezeichnet, gedruckt ist. Bewährte Substrate sind Plättchen aus Aluminiumoxid. Zur Schonung des Widerstandsmaterials kann dieses auch zwischen zwei keramischen Plättchen liegen, die ein Sandwich bilden. Besonders geeignet sind Messwiderstände aus Platin oder aus einer Platinlegierung, insbesondere Pt-100 oder Pt-200-Widerstände, d. h. Platinwiderstände, die bei 0°C einen Widerstand von 100 Ohm bzw. 200 Ohm haben. Solche Widerstände können auf ein Aluminiumsubstrat gedruckt sein und Anschlussdrähte aus entsprechend hochtemperaturbeständigem Metall haben, z. B. wiederum aus Platin oder aus einer Platinlegierung. Meist sind die Anschlussdrähte aus Platin aber nur kurz und werden durch preiswertere Anschlussdrähte aus einem anderen hochtemperaturbeständigen Metall, z. B. aus Inconel 600, Inconel 601 oder Inconel 602 verlängert.

Schutzrohre, die den hohen Temperaturen und chemischen Angriffen im Abgas Stand halten, sind bekannt. Beispiele sind hochtemperaturbeständige Nickellegierungen, z. B. Inconel-Legierungen, insbesondere Inconel 600 und Inconel 601 und Inconel 602. Inconel-Legierungen sind eine Familie von hochtemperaturbeständigen, gegen Oxidation und andere Korrosion besonders widerstandsfähigen Superlegierungen auf Nickelbasis. Inconel 600 z. B. besteht aus 72 % Nickel, 16 % Chrom und 8 % Eisen.

In einer Abwandlung der Erfindung ist ein Teil des Füllstoffes durch ein keramisches Rohr ersetzt, welches in den Füllstoff eingebettet ist und für jede aus dem hinteren Ende des Schutzrohrs herausführende Zuleitung des Messwiderstandes ein gesondertes Loch enthält, welches die jeweilige Zuleitung einzeln aufnimmt und vom Messwiderstand zum Verschluss führt. Ein solches keramisches Rohr hat den Vorteil, dass in der Fertigung der Temperaturfühler eine vorbestimmte Lage der Zuleitungen im Schutzrohr und ihre Isolierung vom Schutzrohr und voneinander leichter zu erhalten sind. Keramische Zweilochrohre aus Aluminiumoxid sind preiswert erhältlich. Die lichte Weite der Löcher in dem keramischen Rohr wird zweckmäßigerweise dem Durchmesser der Zuleitungen, die sie aufnehmen sollen, eng angepasst, so dass diese einerseits gegen Vibrationen geschützt sind und andererseits eine Relativbewegung zwischen dem keramischen Rohr und den darin aufgenommenen Zuleitungen bei thermisch verursachten Längenänderung der Zuleitungen möglich ist.

Das keramische Rohr führt zweckmäßigerweise unmittelbar vom Messwiderstand bis zum Verschluss. Vorzugsweise ist es fest mit dem Substrat des Messwiderstandes verbunden, insbesondere durch keramische Verklebung. In diesem Fall lässt sich der Messwiderstand bequem mittels des keramischen Rohres im Schutzrohr positionieren. Besonders bevorzugt ist es, das keramische Rohr bis in den Verschluss hinein oder sogar durch den Verschluss hindurch zu führen, damit der Verschluss, welcher den Füllstoff vorzugsweise vorspannen soll, nicht auch das keramische Rohr längst vorspannen muss. Nach dem Fixieren des Verschlusses kann das keramische Rohr mit diesem z. B. durch keramisches Verkleben verbunden werden.

Sofern in einem mittleren Bereich zwischen dem Verschluss und dem Messwiderstand eine die Zuleitungen fixierende Stelle mit maximaler Packungsdichte des Füllstoffes gewünscht ist, kann die auch in diesem Fall durch Verengen des Querschnittes des Schutzrohres gebildet werden. Dabei kann das keramische Rohr zwar lokal zerstört werden, jedoch ist das nach dem Positionieren des keramischen Rohres in der Füllmasse unschädlich. Zu beiden Seiten der Engstelle bleibt die Möglichkeit der Zuleitungen, sich thermisch schadlos zu dehnen, erhalten. Durch die lose Führung der Zuleitungen im keramischen Rohr können auf die Anschlussleitungen beim Auftreten von Temperaturrampen vom keramischen Rohr keine Kräfte übertragen werden und somit keine Zug- oder Druckspannungen aufgebaut werden, die zu einem Abreißen der Anschlussleitungen führen können.

Es ist ein besonderer Vorteil der Erfindung, dass der Temperaturfühler in Standardabmessungen vorgefertigt und durch Verbinden mit einer Halterung, welche auf die jeweiligen Einsatzbedingungen abgestimmt ist, zu einem montierbaren, z. B. einschraubbaren Temperaturfühler ergänzt werden kann.

Ausführungsbeispiele der Erfindung sind in den beigefügten Zeichnungen dargestellt. gleiche oder einander entsprechende Teile sind in den Zeichnungen mit übereinstimmenden Bezugszahlen bezeichnet.
- Figur 1: zeigt ein erstes Ausführungsbeispiel eines Temperaturfühlers in einem Längsschnitt,
- Figur 2: zeigt ein zweites Ausführungsbeispiel eines Temperaturfühlers in einem Längsschnitt, und
- Figur 3: zeigt den Temperaturfühler aus Figur 1 in einer Seitenansicht, eingesetzt in eine Halterung.

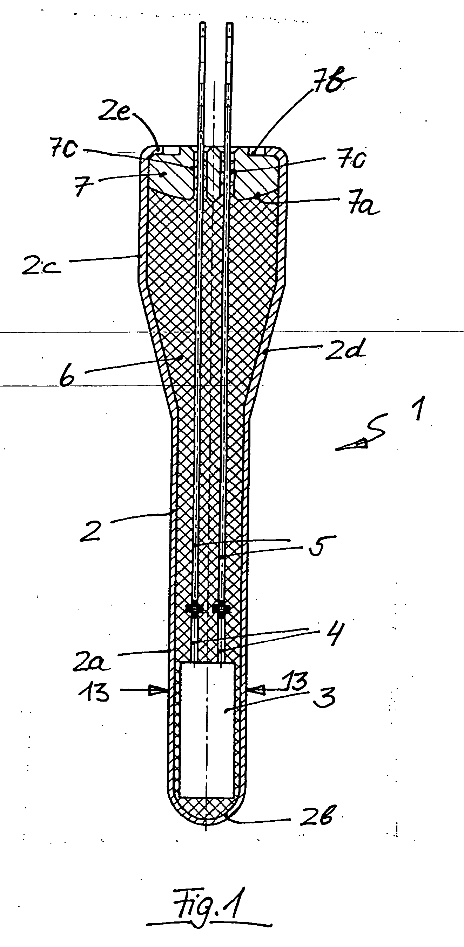

Der in Figur 1 dargestellte Temperaturfühler 1 hat in einem Schutzrohr 2 einen Messwiderstand 3 mit Zuleitungen 4, die durch Anschlussdrähte 5 verlängert sind. Der Messwiderstand 3, die Anschlussleitungen 4 und die Anschlussdrähte 5 sind in einen keramischen oder mineralischen Füllstoff 6 eingebettet.

Der Messwiderstand 3 besteht vorzugsweise aus einem keramischen Plättchen, auf welchen ein Platinwiderstand aufgedruckt ist.

Das Schutzrohr 2 hat einen schlanken, zylindrischen vorderen Abschnitt 2a mit einer geschlossenen, gerundeten Spitze 2b, einen zylindrischen hinteren Abschnitt 2c, dessen Durchmesser größer ist als der Durchmesser des vorderen Abschnitts 2a und einen konischen Übergangsabschnitt 2d. Alternativ kann die Spitze 2b flach und/oder der Übergangsabschnitt 2d gestuft sein.

Der Messwiderstand 3 und der Durchmesser des vorderen Abschnitts 2a des Schutzrohres sind so aufeinander abgestimmt, dass zwischen dem Messwiderstand 3 und dem Schutzrohr 2 kein unnötig großer Abstand besteht.

Das Schutzrohr 2 besteht aus einem hoch wärmebeständigen Metall, z. B. aus Inconel 600, Inconel 601 oder Inconel 602. Der Füllstoff 6 besteht z. B. aus Magnesiumoxidpulver, aus Aluminiumoxidpulver, aus Aluminiumnitridpulver oder aus deren Mischungen. Nach dem Einführen des Messwiderstandes 3 in das Schutzrohr 2 wird der Füllstoff 6 so eingefüllt, dass er den Messwiderstand 3, dessen Anschlussleitungen 4 und die Anschlussdrähte 5 umschließt. Das kann durch schrittweises Einfüllen in Verbindung mit Klopfen und/oder Rütteln geschehen. Das Schutzrohr 2 wird mit Hilfe eines Stopfens 7 verschlossen, bei dem es sich um ein metallisches oder keramisches Formteil mit balliger Vorderseite 7a und abgestufter Rückseite 7b handelt; alternativ kann die Vorderseite 7a flach und/oder die Rückseite 7b flach sein. Der Stopfen 7 hat für die beiden Anschlussdrähte 5 jeweils ein durchgehendes Loch 7c. Mit Hilfe des Stopfens 7 wird der Füllstoff 6 von hinten her in das Schutzrohr 2 gepresst und weiter verdichtet. Erfindungsgemäß hat der Füllstoff 6 eine ungleichmäßige Packungsdichte. Der Füllstoff 6 erstreckt sich jedenfalls dann, wenn der Stopfen 7 aus Metall besteht, auch in die Durchgänge 7c des Stopfens 7 und isoliert die Anschlussdrähte 5 vom Stopfen 7. Der Stopfen 7 ist im Schutzrohr 2 durch den einwärts gebördelten Rand 2e des Schutzrohres 2 gehalten. Das Bördeln des Randes 2e geschieht vorzugsweise während der Stopfen 7 in das Schutzrohr 2 gepresst wird, so dass der Füllstoff 6 mechanisch vorgespannt wird und durch den gebördelten Rand 2e des Schutzrohrs 2 eine Vorspannung erhalten bleibt.

Die Packungsdichte des Füllstoffs 6 hat in der Umgebung des Messwiderstandes 3 ein Maximum und vor der balligen Vorderseite 7a des Stopfens 7 ein weiteres Maximum. Die Lage des Maximums am Messwiderstand 3 ist in den Figuren durch Pfeile 13 markiert; es kann durch nachträgliche Querschnittsverengung des Schutzrohres 2 gebildet sein.

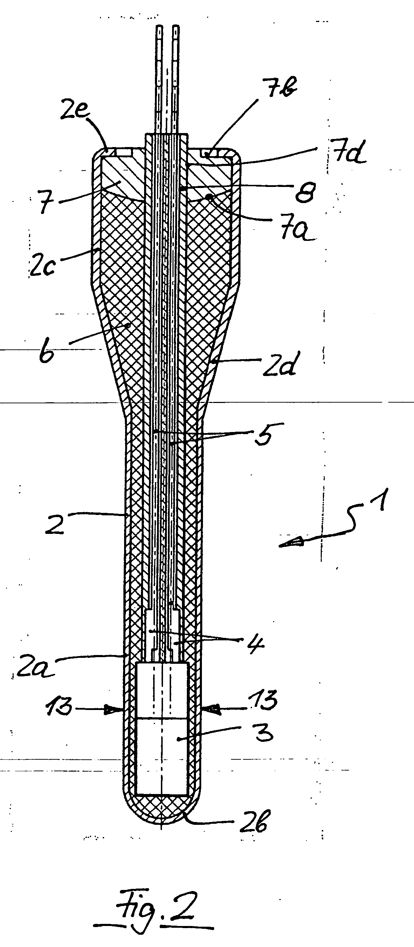

Das in Figur 2 dargestellte Ausführungsbeispiel unterscheidet sich von dem in Figur 1 dargestellten Ausführungsbeispiel darin, dass der Messwiderstand 3 fest mit einem keramischen Zweilochrohr 8 verbunden ist, insbesondere mit einem Zweilochrohr 8 aus Aluminiumoxid. In dem Zweilochrohr 8 verlaufen isoliert voneinander die beiden Anschlussdrähte 5. Der Stopfen 7 hat anstelle von zwei Durchgängen 7c nur einen mittigen Durchgang 7d, in welchem das hintere Ende des keramischen Zweilochrohres 8 steckt. Der Durchmesser des Durchgangs 7d und der Außendurchmesser des Zweilochrohres 8 sind zweckmäßigerweise eng aneinander angepasst, so dass das Zweilochrohr 8 in dem Stopfen 7 eng geführt ist.

Zur Herstellung des Temperaturfühlers 1 wird die Anordnung aus dem Messwiderstand 3 und dem Zweilochrohr 8 in das Schutzrohr 2 eingeführt, danach der Füllstoff 6 eingefüllt, erfindungsgemäß ungleichförmig verdichtet, am Messwiderstand 3 z. B. durch Crimpen, außerdem mit Hilfe des Stopfens 7 vorgespannt und der Stopfen 7 durch Bördeln des hinteren Randes 2e des Schutzrohres 2 gesichert.

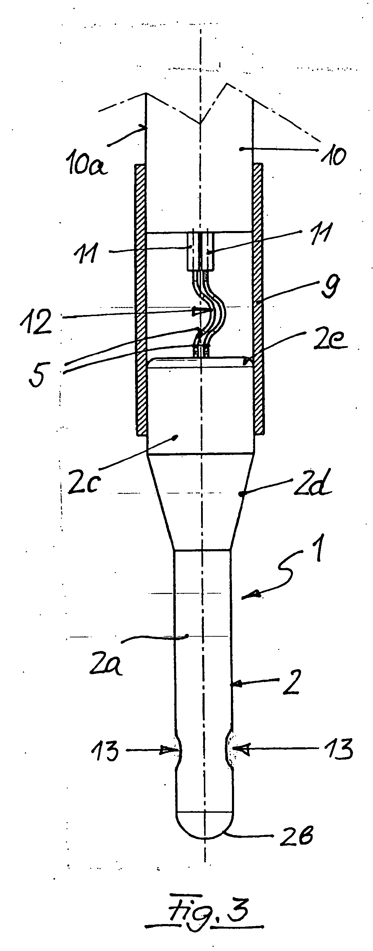

Figur 3 zeigt die Verbindung des Temperaturfühlers 1 aus Figur 1 mit einer Halterung 9, bei welcher es sich um eine metallische Hülse handeln kann, deren eines Ende auf den hinteren Abschnitt 2c des Schutzrohres 2 geschoben und mit diesem zweckmäßigerweise verschweißt ist. In das andere Ende der Halterung 9 kann ein Anschlusskabel 10 eingeführt werden, dessen zwei Innenleiter 11 mit den Anschlussdrähten 5 des Temperaturfühlers 1 zu verbinden sind. Die Verbindung kann durch Schweißen, Hartlöten oder Krimpen geschehen.

Das Anschlusskabel 10 hat zweckmäßigerweise einen Metallmantel 10a, gegenüber welchem die Innenleiter 11 durch einen keramischen oder mineralischen Isolierstoff isoliert sind. Als Isolierstoff besonders geeignet sind Aluminiumoxid und Magnesiumoxid. Der metallische Mantel 10a des Anschlusskabels 10 ist mit der Halterung 9 zweckmäßigerweise verschweißt. Damit Wärmedehnungen den freiliegenden Abschnitt der Anschlussdrähte 5 nicht überbelasten, ist in diesen eine Ausgleichsbiegung 12 vorgesehen.

Die Halterung 9 kann zur Anpassung an unterschiedliche Einsatzbedingungen z. B. mit einem Befestigungsflansch oder mit einer Gewindebuchse versehen sein, die ein Verschrauben des Temperaturfühlers 1 am Einsatzort ermöglicht.

Der Temperaturfühler 1 kann als gleich bleibendes Standardbauteil mit unterschiedlichen Halterungen 9 und mit unterschiedlich langen Anschlusskabeln 10 verbunden werden.

Der Temperaturfühler 1 aus Figur 2 kann in gleicher Weise wie der aus Figur 1 mit einer Halterung 9 und einem Anschlusskabel 10 verbunden werden.

### Bezugszahlenliste:

- 1.: Temperaturfühler
- 2.: Schutzrohr
- 2a.: vorderer Abschnitt
- 2b.: gerundete Spitze
- 2c.: hinterer Abschnitt
- 2d.: Übergangsabschnitt
- 2e.: Rand
- 3.: Messwiderstand
- 4.: Zuleitung
- 5.: Anschlussdrähte
- 6.: Füllstoff
- 7.: Stopfen
- 7a.: Vorderseite
- 7b.: Rückseite
- 7c.: Durchgang
- 7d.: Durchgang
- 8.: Zweilochrohr
- 9.: Halterung
- 10.: Anschlusskabel
- 10a.: Mantel
- 11.: Innenleiter
- 12.: Ausgleichsbiegung
- 13.: Lage eines Maximums der Packungsdichte

## Patentansprüche

1. Temperaturfühler für ein Widerstandsthermometer
- mit einem elektrischen Messwiderstand (3), welcher als Widerstandsmaterial entweder einen keramischen Werkstoff oder ein metallisches Widerstandsmaterial in Verbindung mit einem keramischen oder mineralischen Träger aufweist,
- mit einem Schutzrohr (2), weiches eine geschlossene Spitze (2b) und ein hinteres Ende mit einem Zugang zum Innenraum des Schutzrohrs (2) hat und den Messirviderstand (3) dicht bei der geschlossenen Spitze (2b) des Schutzrohres (2) enthält,
- mit mindestens einer aus dem hinteren Ende des Schutzrohres (2) herausführenden Zuleitung (5),
und mit einem elektrisch isolierenden Füllstoff (6) auf der Grundlage eines keramik schen oder mineralischen Materials, welches den Raum zwischen dem Schutzrohr (2) auf der einen Seite und dem Messwiderstand (3) und seiner wenigstens einen Zuleitung (4, 5) auf der anderen Seite ausfüllt, wobei die Packungsdichte des Füllstoffs (6) in Längsrichtung des Schutzrohrs (2) einen Gradienten hat
**dadurch gekennzeichnet, dass** das Schutzrohr (2) an der Stelle eines Maximums der Packungsdichte des Füllstoffes (6) eine Engstelle (13) aufweist.

2. Temperaturfühler nach Anspruch 1, **dadurch gekennzeichnet, dass** am hinteren Ende des Schutzrohrs (2) ein Verschluss (2e, 7) vorgesehen ist, welcher den Füllstoff (6) im Schutzrohr (2) zurückhält und durch welchen die wenigstens eine Zuleitung (5) aus dem hinteren Ende des Schutzrohres (2) herausgeführt ist.

3. Temperaturfühler nach Anspruch 1 oder 2, **dadurch gekennzeichnet, dass** ein Maximum der Packungsdichte des Füllstoffes (6) in der Nachbarschaft des Messwiderstandes (3) liegt.

4. Temperaturfühler nach Anspruch 1, 2 oder 3, **dadurch gekennzeichnet, dass** ein Maximum der Packungsdichte des Füllstoffes (6) an dem Messwiderstand (3) liegt.

5. Temperaturfühler nach einem der vorstehenden Ansprüche, **dadurch gekennzeichnet, dass** es entlang des Schutzrohres (2) zwei oder höchstens drei Maxima der Packungsdichte des Füllstoffes (6) gibt.

6. Temperaturfühler nach einem der vorstehenden Ansprüche, **dadurch gekennzeichnet, dass** die wenigstens eine Zuleitung (5) im Schutzrohr (2) überwiegend im Bereich eines Minimums der Packungsdichte des Füllstoffes (6) verläuft.

7. Temperaturfühler nach einem der vorstehenden Ansprüche, **dadurch gekennzeichnet, dass** der Füllstoff (6) im Bereich seiner höchsten Packungsdichte unter einer mechanischen Vorspannung steht.

8. Temperaturfühler nach einem der vorstehenden Ansprüche, **dadurch gekennzeichnet, dass** als Füllstoff (6) Magnesiumoxid und/oder Aluminiumoxid und/oder Aluminiumnitrid in Pulverform vorgesehen ist.

9. Temperaturfühler nach einem der Ansprüche 1 bis 7, **dadurch gekennzeichnet, dass** als Füllstoff (6) eine keramische. Vergussmasse, ein keramischer Kleber oder eine hochtemperaturbeständige Wärmeleitpaste vorgesehen ist.

10. Temperaturfühler nach einem der vorstehenden Ansprüche, **dadurch gekennzeichnet, dass** der Messwiderstand (3) einen negativen Temperaturkoeffizienten hat.

11. Temperaturfühler nach einem der vorstehenden Ansprüche, **dadurch gekennzeichnet, dass** der Messwiderstand (3) ein Flachmesswiderstand ist.

12. Temperaturfühler nach einem der Ansprüche 1 bis 9 und 11, **dadurch gekennzeichnet, dass** der Messwiderstand (3) mit Platin oder mit einer Piatinlegierung genbildet und insbesondere ein Pt-100- oder Pt-200-Widerstand ist.

13. Temperaturfühler nach einem der vorstehenden Ansprüche, **dadurch gekennzeichnet, dass** der Verschluss (2e, 7) einen Stopfen (7) aufweist, durch welchen die wenigstens eine Anschlussleitung (5) des Messwiderstand (3) elektrisch isoliert hindurchgeführt ist.

14. Temperaturfühler nach Anspruch 13, **dadurch gekennzeichnet, dass** die Packungsdichte des Füllstoffs (6) vor dem Stopfen ein weiteres Maximum aufweiset.

15. Temperaturfühler nach einem der vorstehenden Ansprüche, **dadurch gekennzeichnet, dass** das Schutzrohr (2) aus einem Metall besteht.

16. Temperaturfühler nach Anspruch 15, **dadurch gekennzeichnet, dass** das Schutzrohr (2) aus einer hochtemperaturbeständigen Legierung, insbesondere aus einer Nickellegierung wie zum Beispiel Inconel besteht, insbesondere aus Inconel 600, Inconel 601 oder aus Inconel 602.

17. Temperaturfühler nach Anspruch 13 in Verbindung mit Anspruch 15 oder 16, **dadurch gekennzeichnet, dass** der Stopfen (7) durch Bördeln des hinteren Endes (2e) des Schutzrohres (2) gehalten ist.

## Claims

1. Temperature sensor for a resistance thermometer comprising
- an electric measuring resistor (3) the resistance material of which consists either of a ceramic material or of a metallic resistance material in combination with a ceramic or a mineral carrier,
- a protective tube (2) comprising a closed tip (2b) and a rear end that provides an access to the inner space of the protective tube (2) and that contains the measuring resistor (3) closely adjacent the closed tip (2b) of the protective tube (2),
- at least one supply line (5) that is brought out through the rear end of the protective tube (2),
and an electrically insulating filler (6) based on a ceramic or a mineral material that fills the space between the protective tube (2) on the one side and the measuring resistor (3) and its at least one supply line (4, 5) on the other side, wherein the packing density of the filler (6) has a gradient in lengthwise direction of the protective tube (2),
**characterized in that** the protective tube (2) exhibits a restriction (13) at the location of a maximum of the packing density of the filler (6).

2. The temperature sensor as defined in Claim 1, **characterized in that** a closure (2e, 7) is provided at the rear end of the protective tube (2), which closure retains the filler (6) in the protective tube (2) and through which the at least one supply line (5) is brought out at the rear end of the protective tube (2).

3. The temperature sensor as defined in Claim 1 or Claim 2, **characterized in that** a maximum of the packing density of the filler (6) is located in the neighborhood of the measuring resistor (3).

4. The temperature sensor as defined in Claims 1, 2 or 3, **characterized in that** a maximum of the packing density of the filler (6) is located at the measuring resistor (3).

5. The temperature sensor as defined in any of the preceding claims, **characterized in that** two or maximally three maxima of the packing density of the filler (6) exist along the protective tube (2).

6. The temperature sensor as defined in any of the preceding claims, **characterized in that** the at least one supply line (5) extends in the protective tube (2) predominantly in an area of a minimum of the packing density of the filler (6).

7. The temperature sensor as defined in any of the preceding claims, **characterized in that** the filler (6) is subjected to a mechanical pre-stress in the area of its maximum packing density.

8. The temperature sensor as defined in any of the preceding claims, **characterized in that** magnesium oxide and/or aluminum oxide and/or aluminum nitride in powder form are provided as the filler (6).

9. The temperature sensor as defined in any of Claims 1 to 7, **characterized in that** a ceramic casting compound, a ceramic adhesive or a highly temperature-resistant heat-transfer paste is provided as filler (6).

10. The temperature sensor as defined in any of the preceding claims, **characterized in that** the measuring resistor (3) has a negative temperature coefficient.

11. The temperature sensor as defined in any of the preceding claims, **characterized in that** the measuring resistor (3) is a flat measuring resistor.

12. The temperature sensor as defined in any of Claims 1 to 9 and 11, **characterized in that** the measuring resistor (3) is formed using platinum or a platinum alloy and is especially a Pt-100 or Pt-200 resistor.

13. The temperature sensor as defined in any of the preceding claims, **characterized in that** the closure (2e, 7) comprises a stopper (7) through which passes the at least one supply line (5) of the measuring resistor (3) in electrically insulated relationship.

14. The temperature sensor as defined in Claim 13, **characterized in that** the packing density of the filler (6) exhibits a further maximum in front of the stopper.

15. The temperature sensor as defined in any of the preceding claims, **characterized in that** the protective tube (2) consists of a metal.

16. The temperature sensor as defined in Claim 15, **characterized in that** the protective tube (2) consists of a highly temperature-resistant alloy, especially is a nickel alloy such as Inconel, especially Inconel 600, Inconel 601 or Inconel 602.

17. The temperature sensor as defined in Claim 13 in combination with Claim 17 or Claim 18, **characterized in that** the stopper (7) is retained in its position by inwardly flanging the rear end (2e) of the protective tube (2).

## Revendications

1. Sonde de température pour un thermomètre à résistance,
- avec une résistance de mesure électrique (3), comportant, en tant que matériau de résistance, soit un matériau céramique ou un matériau de résistance métallique, en association avec un substrat céramique ou minéral,
- avec un tube de protection (2) possédant une pointe fermée (2b) et une extrémité arrière avec un accès à l'espace intérieur du tube de protection (2), et contenant la résistance de mesure (3) tout près de la pointe fermée (2b) du tube de protection (2),
- avec au moins une conduite d'arrivée (5) sortant de l'extrémité arrière du tube de protection (2),
- et avec une matière de charge électriquement isolante (6), à base d'un matériau céramique ou minéral, remplissant l'espace entre le tube de protection (2) d'un côté et la résistance de mesure (3) et son au moins une conduite d'arrivée (4, 5) de l'autre côté, dans laquelle la densité de tassement de la matière de charge (6) présente un gradient dans le sens longitudinal du tube de protection (2),
**caractérisée en ce que** le tube de protection (2) comporte un passage resserré (13) à l'endroit d'un maximum de la densité de tassement de la matière de charge (6).

2. Sonde de température selon la revendication 1, **caractérisée en ce qu'**à l'extrémité arrière du tube de protection (2), il est prévu une fermeture (2e, 7) retenant la matière de charge (6) dans le tube de protection (2), et par laquelle l'au moins une conduite d'arrivée (5) sort de l'extrémité arrière du tube de protection (2).

3. Sonde de température selon la revendication 1 ou 2, **caractérisée en ce qu'**un maximum de la densité de tassement de la matière de charge (6) se trouve à proximité de la résistance de mesure (3).

4. Sonde de température selon la revendication 1, 2 ou 3, **caractérisée en ce qu'**un maximum de la densité de tassement de la matière de charge (6) se trouve sur la résistance de mesure (3).

5. Sonde de température selon l'une des revendications précédentes, **caractérisée en ce qu'**il existe deux ou au plus trois maximums de densité de tassement de la matière de charge (6) le long du tube de protection (2).

6. Sonde de température selon l'une des revendications précédentes, **caractérisée en ce que** l'au moins une conduite d'arrivée (5) dans le tube de protection (2) s'étend principalement dans la région d'un minimum de densité de tassement de la matière de charge (6).

7. Sonde de température selon l'une des revendications précédentes, **caractérisée en ce que** la matière de charge (6) se trouve sous contrainte mécanique dans la région de sa densité de tassement la plus élevée.

8. Sonde de température selon l'une des revendications précédentes, **caractérisée en ce que** de l'oxyde de magnésium et/ou de l'oxyde d'aluminium et/ou du nitrure d'aluminium sous forme de poudre sont prévus en tant que matières de charge (6).

9. Sonde de température selon l'une des revendications 1 à 7, **caractérisée en ce qu'**une masse de remplissage céramique, une colle céramique ou une pâte thermo-conductrice résistante aux températures élevées, est prévue en tant que matière de charge (6).

10. Sonde de température selon l'une des revendications précédentes, **caractérisée en ce que** la résistance de mesure (3) présente un coefficient de température négatif.

11. Sonde de température selon l'une des revendications précédentes, **caractérisée en ce que** la résistance de mesure (3) est une résistance de mesure plate.

12. Sonde de température selon l'une des revendications 1 à 9 et 11, **caractérisée en ce que** la résistance de mesure (3) est formée avec du platine ou un alliage de platine, et est en particulier une résistance Pt100 ou Pt200.

13. Sonde de température selon l'une des revendications précédentes, **caractérisée en ce que** la fermeture (2e, 7) comporte un bouchon (7) à travers lequel passe l'au moins une conduite d'arrivée (5) de la résistance de mesure (3), tout en étant électriquement isolée.

14. Sonde de température selon la revendication 13, **caractérisée en ce que** la densité de tassement de la matière de charge (6) présente un maximum supplémentaire devant le bouchon.

15. Sonde de température selon l'une des revendications précédentes, **caractérisée en ce que** le tube de protection (2) est constitué d'un métal.

16. Sonde de température selon la revendication 15, **caractérisée en ce que** le tube de protection (2) est constitué d'un alliage résistant aux températures élevées, en particulier d'un alliage de nickel, tel que par exemple l'inconel, en particulier d'inconel 600, d'inconel 601 ou d'inconel 602.

17. Sonde de température selon la revendication 13, en association avec la revendication 15 ou 16, **caractérisée en ce que** le bouchon (7) est maintenu par rabattement de l'extrémité arrière (2e) du tube de protection (2).
